# EUROPEAN PATENT SPECIFICATION

(11) **EP 2 774 400 B1**
(45) Date of publication and mention of the grant of the patent: **11.09.2019**
(21) Application number: 11875081.9
(22) Date of filing: 01.11.2011
(51) Int. Cl.: H04W 12/02, H04L 29/06, H04M 1/60, H04L 9/06, H04W 12/00

(54) **COMMUNICATION EQUIPMENT FOR SECURE COMMUNICATION**
KOMMUNIKATIONSVORRICHTUNG FÜR SICHERE KOMMUNIKATION
ÉQUIPEMENT DE COMMUNICATION POUR UNE COMMUNICATION SÉCURISÉE

(43) Date of publication of application: 10.09.2014
(73) Proprietor: Savox Communications Oy Ab (Ltd), 02150 Espoo (FI)
(72) Inventor: AURANEN, Pasi, FI-24260 Salo (FI)
(74) Representative: Berggren Oy, Helsinki & Oulu
(86) International application number: PCT/FI2011/050961
(87) International publication number: WO 2013/064717

(56) References cited:
- EP-A1- 1 981 214
- EP-A1- 2 262 143
- WO-A2-2008/129546
- US-A1- 2003 083 024
- US-A1- 2011 034 125
- US-A1- 2011 034 125
- GEHRMANN C: "Bluetooth Security White Paper, Bluetooth SIG", BLUETOOTH DOC, XX, XX, 19 April 2002 (2002-04-19), pages 1-46, XP003010085,
- BLUETOOTH SECURITY WHITE PAPER, BLUETOOTH SIG SECURITY EXPERT GROUP XP003010085 Retrieved from the Internet: <URL:https://www.bluetooth.org/DocMan/handl ers/DovdnIoadDoc.ashx?doc id=128795> [retrieved on 2012-08-08]

## Description

### Field of the invention

The invention relates to communication equipment which provides secure communication and comprises a user interface device and a communication device that are interconnected via a data link. Furthermore, the invention relates to a method for the purpose of providing secure communication with the communication equipment, to the user interface device, and to a computer program for the purpose of providing secure communication with the communication equipment.

### Background

In many cases there is a need for communication equipment whose functionality is distributed to two or more separate devices that are interconnected with a short-range data link. One of the devices of the communication equipment is often a communication device capable of providing connections to external communications networks and another of the devices is often a user interface device which may comprise for example a microphone and an earpiece and which is connected to the communication device via the short-range data link. For example, the communication equipment can be a mobile radio set where the communication device is a radio device suitable for long-range radio connections and the user interface device can be, for example, a headset which is wirelessly connected to the radio device via a short-range radio link. Communication equipment of the kind-described above is presented for example in publication US2011034125.

In order to provide secure communication, it is not sufficient that only the above-mentioned long-range radio connections are encrypted, but the encryption is needed in the short-range radio link too. The short-range radio link can be, for example but not necessary, a Bluetooth® radio link.

Publication EP2106169 discloses communication equipment where the user interface device is a headset and the communication device is a radio device suitable for long-range radio connections. In the long-range radio connections, a cryptographic algorithm in combination with a key to encrypt and decrypt information is employed. The short-range radio link between the headset and the radio device is secured with the aid of a recorded list of random-like bits that are copied to both the radio device and the headset. In both the radio device and the headset, the random-like bits of the recorded list are combined in an exclusive OR-gate with digital data carrying audio information. Thus, for example the information transferred from the headset to the radio device gets encrypted in the headset and decrypted in the radio device. The recorder list of the random-like bits can be formed, for example, by feeding naturally or artificially produced noise into the cryptographic algorithm and by storing the resulting bits in a memory.

In many cases, the user interface device comprises not only means for converting voice to digital data and vice versa but also a user interface for receiving commands which control the operation of the whole communication equipment. The user interface may comprise, for example, a push-to-talk button and/or a keyboard. In order to achieve a sufficient immunity to denial-of-service "DoS" attacks, it is important that also the event data that represents the commands received via the user interface is appropriately encrypted. In cases where the event data is not properly encrypted, certain types of jamming signal might cause for example the communication device to believe that e.g. the push-to-talk button of the user interface device is being continuously pressed or that it is never pressed. This would naturally disturb or even prevent the operation of the communication equipment.

The obvious solution to the above-described problem is to implement the short-range data link between the user interface device and the communication device with transceivers which support a suitable cryptographic algorithm so as to encrypt the whole data stream transferred over the short-range data link. This approach is proposed for example by Gehrmann C.: "Bluetooth Security White Paper", Bluetooth SIG Security Expert Group, 2002-04-19. In conjunction with many commercially available transceivers, e.g. secured Bluetooth® transceivers, the inconvenience related to this approach is that replacing the cryptographic algorithm with another cryptographic algorithm requires replacing the transceiver with another transceiver. Therefore, it is challenging to provide such user interface devices, e.g. remote speaker-microphones, and communication devices which are flexible to support different cryptographic algorithms. Hence, it is challenging to achieve in-teroperability between, for example, remote speaker-microphones and radio devices made by different vendors.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention, there is provided a new user interface device suitable for being a part of communication equipment whose functionality is distributed to separate devices interconnected with a data link. The user interface device according to the invention comprises:
- a user interface for receiving command actions from a user,
- a processor for a) receiving a first digital data stream, b) generating digital event data in accordance with the command actions directed to the user interface, c) for combining the digital event data with the first digital data stream so as to form a second digital data stream, and d) for encrypting the second digital data stream so as to form a third digital data stream in accordance with cryptographic control data accessible to the processor, and
- a transmitter for transmitting the third digital data stream to the data link.

The first digital data stream can be, for example but not necessarily, digital output data of an audio coder. As the encryption is done after the combining of the event data to the first digital data stream, both the event data and the first digital data stream are encrypted. This provides protection against eavesdropping directed to the first digital data stream that may represent, for example, audio information and against attacks against the event data that represents the command actions of the user. On the other hand, the encryption is carried out with the processor before the digital data stream is supplied to the transmitter. Hence, there is no need to use a transmitter which is arranged to support a cryptographic algorithm. The processor is arranged to encrypt the second digital data stream in accordance with the cryptographic control data that is accessible to the processor. Hence, the user interface device can be configured to support different cryptographic algorithms by loading appropriate cryptographic control data that defines the cryptographic algorithm and keys needed for encrypting the second digital data stream. The cryptographic control data can be part of a library of cryptographic control data, and the processor can be arranged to select an appropriate part of the library with the aid of one or more control parameters. In this case, the user interface device can be easily configured to support any of those cryptographic algorithms which are defined in the library.

In accordance with the second aspect of the invention, there is provided new communication equipment whose functionality is distributed to a user interface device according to the invention and to a communication device which is interconnected to the user interface device via a data link. The communication device of the communication equipment comprises:
- a receiver for receiving the third digital data stream from the data link,
- a processor for a) decrypting the third digital data stream so as to regenerate the second digital data stream and for b) separating the digital event data and the first digital data stream from the regenerated second digital data stream, and
- a transmitter for transmitting information carried by the first digital data stream to a communications network,
wherein the processor of the communication device is arranged to control the operation of the transmitter in accordance with the digital event data.

In accordance with the third aspect of the invention, there is provided a new method for providing secure communication between a user interface device of communication equipment and a communication device of the communication equipment. The method according to the invention comprises the following actions in the user interface device:
- using a processor for receiving a first digital data stream the information carried by which is to be transmitted to the communication device,
- using the processor for generating digital event data in accordance with command actions directed to a user interface,
- using the processor for combining the digital event data with the first digital data stream so as to form a second digital data stream,
- using the processor for encrypting the second digital data stream so as to form a third digital data stream in accordance with cryptographic control data accessible to the processor, and
- delivering the third digital data stream to a transmitter of the user interface device so as to transmit the third digital data stream to the communication device via a data link.

In accordance with the forth aspect of the invention, there is provided a new computer program for providing secure communication between a user interface device of communication equipment and a communication device of the communication equipment. The computer program comprises computer executable instructions for controlling a programmable processor of the user interface device to:
- generate digital event data in accordance with command actions directed to a user interface,
- combine the digital event data with a first digital data stream so as to form a second digital data stream,
- encrypt the second digital data stream so as to form a third digital data stream in accordance with cryptographic control data accessible to the programmable processor, and
- control a transmitter of the user interface device to transmit the third digital data stream to the data link.

A computer program product according to the invention comprises a computer readable medium, e.g. a Compact Disc, encoded with the above-mentioned computer executable instructions.

Various exemplifying embodiments of the invention both as to constructions and to methods of operation, together with additional objects and advantages thereof, will be best understood from the following description of the exemplifying embodiments when read in connection with the accompanying drawings.

The exemplifying embodiments of the invention presented in this document are not to be interpreted to pose limitations to the applicability of the appended claims. The verb "to comprise" is used in this document as an open limitation that neither excludes nor requires the existence of also unrecited features. The features recited in depending claims are mutually freely combinable unless otherwise explicitly stated.

### Brief description of the figures

Embodiments of the invention presented in the sense of examples and their advantages are explained in greater detail below with reference to the accompanying drawings, in which
figure 1 shows a functional block diagram of communication equipment according to an embodiment of the invention,
figures 2a and 2b show communication equipments according to embodiments of the invention, and
figure 3 is a flow chart of a method according to an embodiment of the invention for providing secure communication between a user interface device of communication equipment and a communication device of the communication equipment.

### Description of the exemplifying embodiments

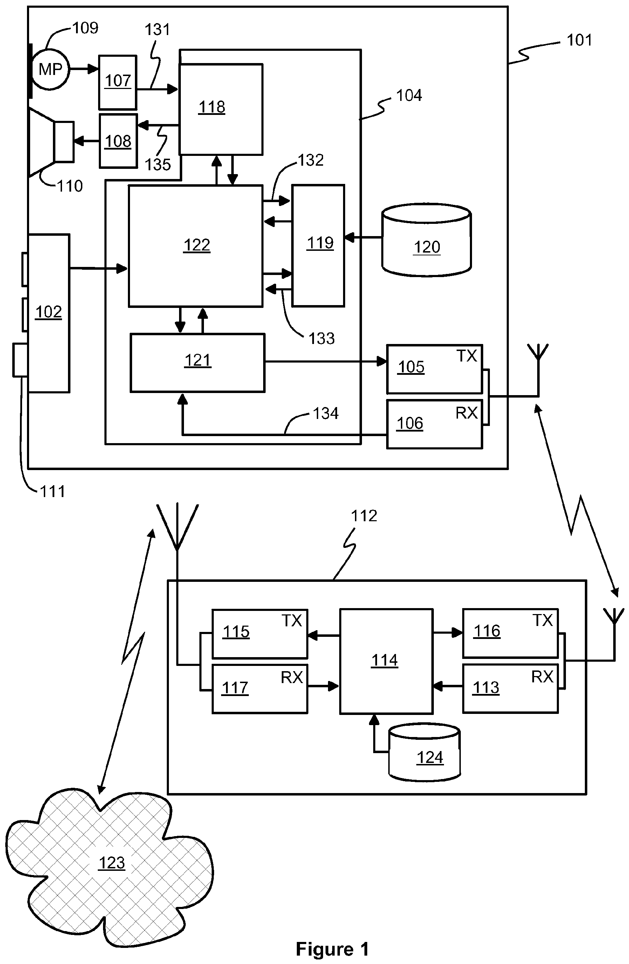

Figure 1 shows a functional block diagram of communication equipment according to an embodiment of the invention. The communication equipment comprises a user interface device 101 and a communication device 112 which are interconnected with a short-range radio link. The communication equipment can be, for example, a mobile radio set where the communication device 112 is a radio device suitable for providing long-range radio connections and the user interface device 101 can be, for example, a remote speaker-microphone "RSM".

The user interface device 101 comprises a user interface 102 for receiving command actions from a user of the communication equipment. The user interface may comprise for example a push-to-talk button 111 and/or a keyboard. The user interface device 101 comprises a processor 104 arranged to receive a first digital data stream 131 that represents a digital output signal of an audio coder 107. The audio coder 107 produces the first digital data stream by converting, into a digital form, a first analog signal that represents an analog output signal of a microphone 109. The processor 104 is preferably arranged to carry out certain pre-processing actions directed to the first digital data stream. These pre-processing actions may comprise, for example, coding the first digital data stream to a desired compression format and packetizing the first digital data stream for a suitable block size for further operations. In figure 1, a functional block 118 that is preferably software-implemented, represents the pre-processing actions. The processor 104 is arranged to generate digital event data in accordance with the command actions directed to the user interface 102. The digital event data may indicate, for example, whether or not the push-to-talk button 111 is being pressed. Furthermore, the digital event data may indicate keystrokes directed to the keyboard of the user interface.

The processor 104 is arranged to combine the digital event data with the first digital data stream so as to form a second digital data stream 132 that contains both the first digital data stream and the digital event data. The second digital data stream can be for example a stream of data packets so that the payload of each data packet contains part of the first digital data stream and the header or trailer of each data packet contains part of the event data. For example, the header of each data packet of the second digital data stream 132 may express the status of the push-to-talk button 111 and/or the most recent keystrokes directed to the keyboard, and the payload of each data packet may contain digitized audio, video or audio-video information. In figure 1, a functional block 122 that is preferably software-implemented, represents an application for combining the digital event data with the first digital data stream and for controlling the routing of digital data between different functional blocks implemented with the processor 104.

The processor 104 is arranged to encrypt the second digital data stream so as to form a third digital data stream 133 in accordance with cryptographic control data accessible to the processor. The cryptographic control data may comprise one or more sets of processor executable instructions, i.e. one or more program codes, defining one or more cryptographic algorithms. Furthermore, the cryptographic control data may comprise required configuration parameters, e.g. encryption/decryption keys, of the one or more cryptographic algorithms. The one or more cryptographic algorithms can be for example DES (Data Encryption Standard), AES (Advanced Encryption Standard), IDEA (International Data Encryption Algorithm), Blowfish, Twofish, and/or triple-DES. In figure 1, a functional block 119 that is preferably software-implemented, represents the cryptographic functionality. The user interface device 101 can be configured to support different cryptographic algorithms by loading appropriate cryptographic control data that defines the cryptographic algorithm and the appropriate cryptographic parameters. As indicated above, it is possible that the cryptographic control data contains data related to many different cryptographic algorithms. In this case, the processor 104 can be arranged to select a desired cryptographic algorithm on the basis of one or more control parameters. The user interface device 101 may comprise a memory element 120 for storing the cryptographic control data. It is also possible that the processor 104 contains so much internal memory that the cryptographic control data can be stored in the processor.

The processor 104 is arranged to deliver the encrypted digital data stream to a transmitter 105 of the user interface device 101. Depending on the transmission protocol being used in the short-range radio link between the user interface device and the communication device 112, the processor 104 can be arranged to process the digital data stream to be transmitted with transmission protocol-related actions. In figure 1, a functional block 121 that is preferably software-implemented, represents the transmission protocol-related actions. The transmission protocol-related actions can be, for example, actions related to a short-range radio protocol stack.

The communication device 112 of the communication equipment comprises a first receiver 113 for receiving the third digital data stream from the user interface device 101 via the short-range radio link. The communication device 112 comprises a processor 114 arranged to decrypt the third digital data stream so as to regenerate the second digital data stream and to separate the digital event data and the first digital data stream from the regenerated second digital data stream. The communication device 112 comprises a first transmitter 115 for transmitting information carried by the first digital data stream to a communications network 123 that can be e.g. a cellular radio network and that is presented as a cross-hatched cloud in figure 1. The processor 114 is arranged to control the operation of the transmitter 115 of the communication device in accordance with the digital event data. For example, the processor 114 can be arranged to activate or deactivate the transmitter 115 according to the status of the push-to-talk button 111 expressed by the event data, and/or to determine the transmission power level, the line code, the channel code, and/or other factors related to the transmission on the basis of the event data.

In communication equipment according to an embodiment of the invention, the communication device 112 comprises a second receiver 117 for receiving digital information from the communications network 123. The processor 114 of the communication device is arranged to encrypt the digital information received from the communications network in accordance with the cryptographic control data accessible to the processor 114 so as to form a fourth digital data stream. The cryptographic control data is the same as which is used in the user interface device 101 and it can be stored in a memory element 124 or in the processor 114. The communication device comprises a second transmitter 116 for transmitting the fourth digital data stream to the user interface device 101 via the short-range radio link. The user interface device 101 comprises a receiver 106 for receiving the fourth digital data stream 134 from the communication device 112 via the short-range radio data link. The processor 104 of the user interface device is arranged to decrypt the fourth digital data stream in accordance with the cryptographic control data accessible to the processor 104 so as to form a fifth digital data stream 135 and to output the fifth digital data stream. The user interface device 101 comprises an audio decoder 108 connected to the processor 104 and arranged to convert the fifth digital data stream to a second analog signal. The user interface device further comprises a speaker element 110 or an earpiece for converting the second analog signal to voice. The communication equipment according to this embodiment of the invention is capable of providing bidirectional communication. In an exemplifying embodiment of the invention, the transmitter 115 and the receiver 117 of the communication device 112 are arranged to provide signaling functionalities so as to enable dialed connections to a public switched telephone network "PSTN" so that the dialing is carried out in accordance with the digital event data received from the user interface device 101.

The transmitter 105 and the receiver 106 of the user terminal device 101, and, correspondingly, the transmitter 116 and the receiver 113 of the communication device 112 can be, for example, arranged to provide the short-range radio link on one or more Industrial, Scientific, and Medical "ISM"-radio bands defined by the ITU-R specifications 5.138, 5.150, and 5.280 of the Radio Regulations. The short-range radio link can be, for example, a Bluetooth® radio link operating at 2.45 GHz center frequency, a High Performance Radio LAN "HiperLAN" radio link operating at 5.8 GHz center frequency, a IEEE 802.11 / WiFi radio link operating at 2.45 or 5.8 GHz center frequency, or IEEE 802.15.4, ZigBee radio link operating at 915 MHz or 2.45 GHz center frequency.

In the exemplifying case shown on figure 1, the user interface device 101 comprises the microphone 109 for converting voice to an analog signal, the audio coder 107 for converting the analog signal to the digital data stream 131, the audio decoder 108 for converting the digital data stream 135 to an analog signal, and a speaker element 110 for converting the analog signal to voice. It should be, however, noted that the user interface device 101 could as well comprise appropriate connectors for receiving e.g. a plug-in module that comprises a microphone, a speaker element or an earpiece, and an audio codec. Furthermore, it should be noted that in some applications the data link between the user interface device 101 and the communication device 112 could be e.g. an infra-red data link instead of a short-range radio link. The processor 104 of the user interface device 101 may comprise one or more processor circuits. Correspondingly, the processor 114 of the communication device 112 may be a single processor circuit or it may comprise many processor circuits. Each processor circuit can be a programmable processor circuit, a dedicated electrical circuit such as an e.g. an Application Specific Integrated Circuit "ASIC", a configurable electrical circuit such as e.g. a Field Programmable Gate Array "FPGA", or a combination of two or more of the above-mentioned alternatives.

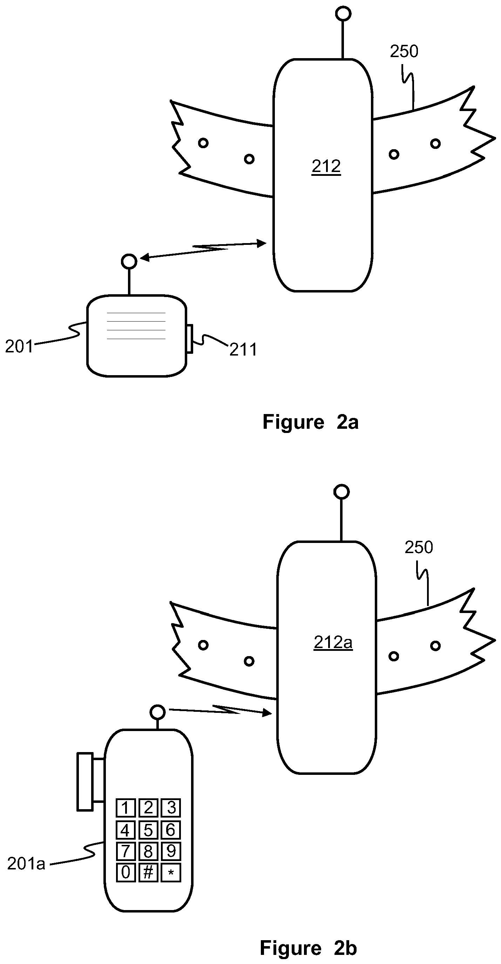

Figures 2a and 2b show communication equipments according to embodiments of the invention. The communication equipment shown in figure 2a comprises a user interface device 201 that is a remote speaker-microphone equipped with a push-to-talk button 211. The communication equipment comprises a communication device 212 which can be carried, for example, on a belt 250 of a user and which provides connections to an external communications network in accordance with the status of the push-to-talk button 211. The communication device 212 and the user interface device 201 comprise short-range radio transceivers for providing a bidirectional short range radio link between the communication device 212 and the user interface device 201. The communication equipment shown in figure 2a can be, for example, such as explained with the aid of figure 1. The communication equipment shown in figure 2b comprises a user interface device 201a that is a remote camera unit equipped with a keyboard. The communication equipment comprises a communication device 212a which provides connections to an external communications network in accordance with keystrokes directed to the keyboard. The user interface device 201a comprises a short-range radio transmitter and the communication device 212a comprises a short-range radio receiver for providing a unidirectional short range radio link from the user interface device 201a to the communication device 212a. As indicated by the example shown in figure 2b, the applicability of the present invention is not limited to cases where there is a bidirectional communication or data transfer between the user interface device and the communication device of communication equipment.

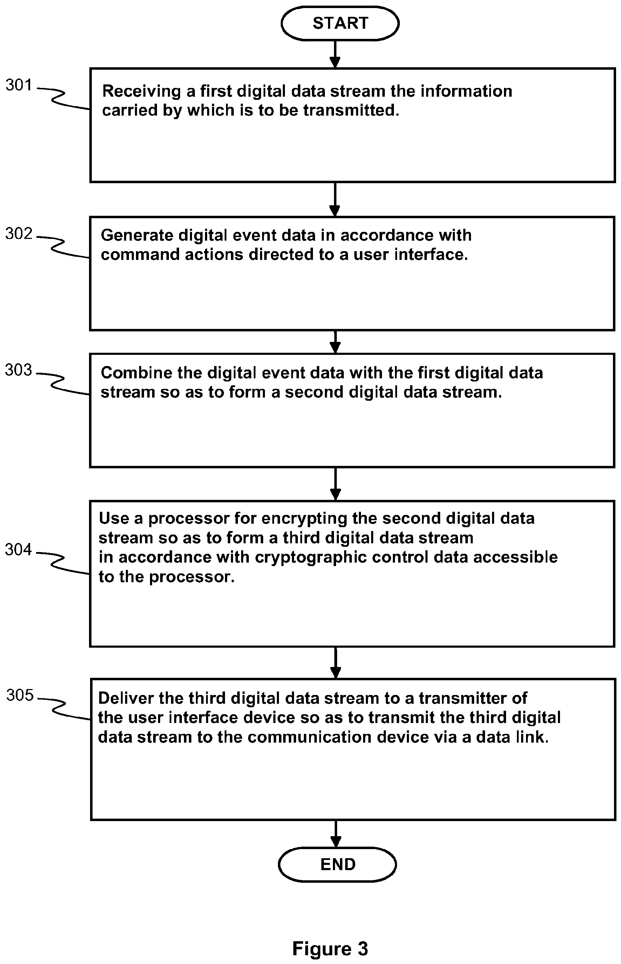

Figure 3 is a flow chart of a method according to an embodiment of the invention for providing secure communication between a user interface device of communication equipment and a communication device of the communication equipment. The method comprises the following actions in the user interface device:
- action 301: receiving a first digital data stream the information carried by which is to be transmitted from the user interface device to the communication device,
- action 302: generating digital event data in accordance with command actions directed to a user interface,
- action 303: combining the digital event data with the first digital data stream so as to form a second digital data stream,
- action 304: using a processor for encrypting the second digital data stream so as to form a third digital data stream in accordance with cryptographic control data that is accessible to the processor, and
- action 305: delivering the third digital data stream to a transmitter of the user interface device so as to transmit the third digital data stream to the communication device via a data link.

A method according to an embodiment of the invention further comprises the following actions in the communication device of the communication equipment:
- receiving the third digital data stream from the data link,
- using a processor of the communication device for decrypting the third digital data stream so as to regenerate the second digital data stream in accordance with the cryptographic control data which has been made accessible also to the processor of the communication device,
- separating the digital event data and the first digital data stream from the regenerated second digital data stream,
- transmitting information carried by the first digital data stream to a communications network, and
- controlling, in accordance with the digital event data, the transmission of the information carried by the first digital data stream.

A method according to an embodiment of the invention further comprises the following actions so as to enable bidirectional communication:
- receiving, at the communication device, digital information from the communications network,
- using a processor of the communication device for encrypting the digital information received from the communications network so as to form a fourth digital data stream in accordance with the cryptographic control data accessible to the processor of the communication device,
- delivering the fourth digital data stream to a short-range transmitter of the communication device so as to transmit the fourth digital data stream to the user interface device via the data link,
- receiving, at the user interface device, the fourth digital data stream,
- using a processor of the user interface device for decrypting the fourth digital data stream in accordance with the cryptographic control data.

A computer program according to an embodiment of the invention comprises software modules for providing secure communication between a user interface device of communication equipment and a communication device of the communication equipment. The software modules comprise computer executable instructions for controlling a programmable processor of the user interface device to:
- generate digital event data in accordance with command actions directed to a user interface,
- combine the digital event data with a first digital data stream so as to form a second digital data stream,
- encrypt the second digital data stream so as to form a third digital data stream in accordance with cryptographic control data accessible to the programmable processor, and
- control a transmitter of the user interface device to transmit the third digital data stream to the data link.

In a computer program according to an embodiment of the invention, the software modules further comprise computer executable instructions for controlling a programmable processor of the communication device to:
- decrypt the third digital data stream received from the data link so as to regenerate the second digital data stream,
- separate the digital event data and the first digital data stream from the regenerated second digital data stream,
- control a transmitter to transmit information carried by the first digital data stream to a communications network, and
- control, in accordance with the digital event data, the transmission of the information carried by the first digital data stream.

The software modules can be, for example, subroutines and functions generated with a suitable programming language.

A computer program product according to an embodiment of the invention comprises a non-volatile computer readable medium, e.g. a compact disc ("CD"), encoded with a computer program according to an embodiment of the invention.

A signal according to an embodiment of the invention is encoded to carry information defining a computer program according to an embodiment of the invention.

The specific examples provided in the description given above should not be construed as limiting. Therefore, the invention is not limited merely to the embodiments described above.

## Claims

1. A user interface device (101, 201, 201a) comprising:
- a user interface (102) for receiving command actions from a user,
- a processor (104) for receiving a first digital data stream, for generating digital event data in accordance with the command actions directed to the user interface, and for combining the digital event data with the first digital data stream so as to form a second digital data stream, and
- a transmitter (105) for transmitting a third digital data stream to a data link,
**characterized in that** the processor is arranged to encrypt the second digital data stream so as to form the third digital data stream in accordance with cryptographic control data accessible to the processor and to deliver the third digital data stream to the transmitter (105).

2. A user interface device according to claim 1, wherein the user interface device comprises a receiver (106) for receiving a fourth digital data stream from the data link, and the processor is arranged to decrypt the fourth digital data stream so as to form a fifth digital data stream and to output the fifth digital data stream.

3. A user interface device according to claim 1, wherein the transmitter is a radio transmitter configured to operate at 2.45 GHz or 5.8 GHz or 915 MHz center frequency.

4. A user interface device according to claim 1, wherein the user interface device further comprises an audio coder (107) connected to the processor and arranged to convert a first analog signal carrying audio information to the first digital data stream.

5. A user interface device according to claim 2, wherein the user interface device further comprises an audio decoder (108) connected to the processor and arranged to convert the fifth digital data stream to a second analog signal.

6. A user interface device according to claim 1, wherein the user interface comprises a push-to-talk button (111) and the processor is arranged to set the digital event data to indicate whether or not the push-to-talk button is being pressed.

7. A user interface device according to claim 1, wherein the user interface comprises a keyboard and the processor is arranged to set the digital event data to indicate keystrokes directed to the keyboard.

8. Communication equipment comprising a user interface device (101, 201, 201a) according to any of claims 1-7 and a communication device (112, 212, 212a) comprising:
- a first receiver (113) for receiving, via the data link, the third digital data stream from the user interface device,
- a processor (114) for a) decrypting the third digital data stream so as to regenerate the second digital data stream and for b) separating the digital event data and the first digital data stream from the regenerated second digital data stream, and
- a first transmitter (115) for transmitting information carried by the first digital data stream to a communications network,
wherein the processor of the communication device is arranged to control the operation of the transmitter of the communication device in accordance with the digital event data.

9. Communication equipment according to claim 8, wherein the communication device further comprises a second transmitter (116) for transmitting a fourth digital data stream to the user interface device via the data link and a second receiver (117) for receiving digital information from the communications network, and the processor of the communication device is arranged to encrypt the digital information received from the communications network so as to form the fourth digital data stream.

10. Communication equipment according to claim 9, wherein the first transmitter and the second receiver of the communication device are arranged to provide dialed connections with a public switched telephone network (PSTN) in accordance with the digital event data.

11. Communication equipment according to claim 9, wherein the first transmitter and the second receiver of the communication device are arranged to provide connections with a cellular mobile network.

12. A method for providing secure communication between a user interface device of communication equipment and a communication device of the communication equipment, the method comprising the following actions in the user interface device:
- using a processor for receiving (301) a first digital data stream the information carried by which is to be transmitted to the communication device,
- using the processor for generating (302) digital event data in accordance with command actions directed to a user interface,
- using the processor for combining (303) the digital event data with the first digital data stream so as to form a second digital data stream, and
- delivering (305) a third digital data stream to a transmitter of the user interface device so as to transmit the third digital data stream to the communication device via a data link,
**characterized in that** the method comprises using (304) the processor for encrypting the second digital data stream so as to form the third digital data stream in accordance with cryptographic control data accessible to the processor.

13. A method according to claim 12, wherein the method further comprises the following actions in the communication device of the communication equipment:
- receiving the third digital data stream from the data link,
- decrypting the third digital data stream so as to regenerate the second digital data stream,
- separating the digital event data and the first digital data stream from the regenerated second digital data stream,
- transmitting information carried by the first digital data stream to a communications network, and
- controlling, in accordance with the digital event data, the transmission of the information carried by the first digital data stream.

14. A computer program comprising computer executable instructions for controlling a programmable processor of a user interface device of communication equipment to:
- generate digital event data in accordance with command actions directed to a user interface ,
- combine the digital event data with a first digital data stream so as to form a second digital data stream, and
- control a transmitter of the user interface device to transmit a third digital data stream to a data link,
**characterized in that** the computer program further comprises computer executable instructions for controlling the programmable processor of the communication device to encrypt the second digital data stream so as to form the third digital data stream in accordance with cryptographic control data accessible to the programmable processor and to deliver the third digital data stream to the transmitter.

15. A computer program according to claim 14, wherein the computer program further comprises computer executable instructions for controlling a programmable processor of a communication device of the communication equipment to:
- decrypt the third digital data stream received from the data link so as to regenerate the second digital data stream,
- separate the digital event data and the first digital data stream from the regenerated second digital data stream,
- control a transmitter to transmit information carried by the first digital data stream to a communications network, and
- control, in accordance with the digital event data, the transmission of the information carried by the first digital data stream.

## Patentansprüche

1. Anwenderschnittstelleneinrichtung (101, 201, 201a), die Folgendes umfasst:
- eine Anwenderschnittstelle (102) zum Empfangen von Anweisungsaktionen von einem Anwender,
- einen Prozessor (104) zum Empfangen eines ersten digitalen Datenstroms, um digitale Ereignisdaten gemäß den Anweisungsaktionen, die an die Anwenderschnittstelle gerichtet sind, zu erzeugen und um die digitalen Ereignisdaten mit dem ersten digitalen Datenstrom zu kombinieren, um einen zweiten digitalen Datenstrom zu bilden, und
- einen Sender (105) zum Senden eines dritten digitalen Datenstroms zu einer Datenverbindung,
**dadurch gekennzeichnet, dass** der Prozessor ausgelegt ist, den zweiten digitalen Datenstrom zu verschlüsseln, um den dritten digitalen Datenstrom gemäß kryptographischen Steuerdaten, die für den Prozessor zugänglich sind, zu bilden und den dritten digitalen Datenstrom zum Sender (105) zu übermitteln.

2. Anwenderschnittstelleneinrichtung nach Anspruch 1, wobei die Anwenderschnittstelleneinrichtung einen Empfänger (106) umfasst, um einen vierten digitalen Datenstrom von der Datenverbindung zu empfangen, und der Prozessor ausgelegt ist, den vierten digitalen Datenstrom zu entschlüsseln, um einen fünften digitalen Datenstrom zu bilden und den fünften digitalen Datenstrom auszugeben.

3. Anwenderschnittstelleneinrichtung nach Anspruch 1, wobei der Sender ein Funksender ist, der konfiguriert ist, bei einer Mittenfrequenz von 2,45 GHz, 5,8 GHz oder 915 MHz zu arbeiten.

4. Anwenderschnittstelleneinrichtung nach Anspruch 1, wobei die Anwenderschnittstelleneinrichtung ferner einen Audiocodierer (107) umfasst, der mit dem Prozessor verbunden ist und ausgelegt ist, ein erstes analoges Signal, das Audioinformationen führt, zum ersten digitalen Datenstrom umzusetzen.

5. Anwenderschnittstelleneinrichtung nach Anspruch 2, wobei die Anwenderschnittstelleneinrichtung ferner einen Audiodecoder (108) umfasst, der mit dem Prozessor verbunden ist und ausgelegt ist, den fünften digitalen Datenstrom zu einem zweiten analogen Signal umzusetzen.

6. Anwenderschnittstelleneinrichtung nach Anspruch 1, wobei die Anwenderschnittstelle eine Push-to-Talk-Taste (111) umfasst und der Prozessor ausgelegt ist, die digitalen Ereignisdaten derart zu setzen, dass sie anzeigen, ob die Push-to-Talk-Taste gedrückt worden ist oder nicht.

7. Anwenderschnittstelleneinrichtung nach Anspruch 1, wobei die Anwenderschnittstelle eine Tastatur umfasst und der Prozessor ausgelegt ist, die digitalen Ereignisdaten derart zu setzen, dass sie Tastenaschläge, die auf die Tastatur gelenkt werden, anzeigen.

8. Kommunikationsanlage, die eine Anwenderschnittstelleneinrichtung (101, 201, 201a) nach einem der Ansprüche 1-7 und eine Kommunikationseinrichtung (112, 212, 212a) umfasst und ferner Folgendes umfasst:
- einen ersten Empfänger (113) zum Empfangen mittels der Datenverbindung des dritten digitalen Datenstroms von der Anwenderschnittstelleneinrichtung,
- einen Prozessor (114) zum a) Entschlüsseln des dritten digitalen Datenstroms, um den zweiten digitalen Datenstrom zu regenerieren, und zum b) Trennen der digitalen Ereignisdaten und des ersten digitalen Datenstroms vom regenerierten zweiten digitalen Datenstrom und
- einen ersten Sender (115) zum Senden von Informationen, die durch den ersten digitalen Datenstrom geführt werden, zu einem Kommunikationsnetz, wobei
der Prozessor der Kommunikationseinrichtung ausgelegt ist, den Betrieb des Sender der Kommunikationseinrichtung gemäß den digitalen Ereignisdaten zu steuern.

9. Kommunikationsanlage nach Anspruch 8, wobei die Kommunikationseinrichtung ferner einen zweiten Sender (116) zum Senden eines vierten digitalen Datenstroms zur Anwenderschnittstelleneinrichtung mittels der Datenverbindung und einen zweiten Empfänger (117) zum empfangen digitaler Informationen vom Kommunikationsnetz umfasst und der Prozessor der Kommunikationseinrichtung ausgelegt ist, die digitalen Informationen, die vom Kommunikationsnetz empfangen werden, zu verschlüsseln, um den vierten digitalen Datenstrom zu bilden.

10. Kommunikationsanlage nach Anspruch 9, wobei der erste Sender und der zweite Empfänger der Kommunikationseinrichtung ausgelegt sind, Wählverbindungen mit einem öffentlichen Fernsprechwählnetz (PSTN) gemäß den digitalen Ereignisdaten bereitzustellen.

11. Kommunikationsanlage nach Anspruch 9, wobei der erste Sender und der zweite Empfänger der Kommunikationseinrichtung ausgelegt sind, Verbindungen mit einem zellularen Mobilfunknetz bereitzustellen.

12. Verfahren zum Bereitstellen einer sicheren Kommunikation zwischen einer Anwenderschnittstelleneinrichtung einer Kommunikationsanlage und einer Kommunikationseinrichtung der Kommunikationsanlage, wobei das Verfahren in der Anwenderschnittstelleneinrichtung die folgenden Schritte umfasst:
- Verwenden eines Prozessors zum Empfangen (301) eines ersten digitalen Datenstroms, wobei die Informationen, die durch ihn geführt werden, zur Kommunikationseinrichtung gesendet werden sollen,
- Verwenden des Prozessors zum Erzeugen (302) digitaler Ereignisdaten gemäß Anweisungsaktionen, die an eine Anwenderschnittstelle gerichtet sind,
- Verwenden des Prozessors zum Kombinieren (303) der digitalen Ereignisdaten mit dem ersten digitalen Datenstrom, um einen zweiten digitalen Datenstrom zu bilden, und
- Übermitteln (305) eines dritten digitalen Datenstroms zu einem Sender der Anwenderschnittstelleneinrichtung, um den dritten digitalen Datenstrom mittels einer Datenverbindung zur Kommunikationseinrichtung zu senden,
**dadurch gekennzeichnet, dass** das Verfahren das Verwenden (304) des Prozessors zum Verschlüsseln des zweiten digitalen Datenstroms umfasst, um den dritten digitalen Datenstrom gemäß kryptographischen Steuerdaten, die für den Prozessor zugänglich sind, zu bilden.

13. Verfahren nach Anspruch 12, wobei das Verfahren ferner die folgenden Aktionen in der Kommunikationseinrichtung der Kommunikationsanlage umfasst:
- Empfangen des dritten digitalen Datenstroms von der Datenverbindung,
- Entschlüsseln des dritten digitalen Datenstroms, um den zweiten digitalen Datenstrom zu regenerieren,
- Trennen der digitalen Ereignisdaten und des ersten digitalen Datenstroms vom regenerierten zweiten digitalen Datenstrom,
- Senden von Informationen, die durch den ersten digitalen Datenstrom geführt werden, zu einem Kommunikationsnetz und
- Steuern des Sendens der Informationen, die durch den ersten digitalen Datenstrom geführt werden, gemäß den digitalen Ereignisdaten.

14. Computerprogramm, das computerausführbare Anweisungen zum Steuern eines programmierbaren Prozessors einer Anwenderschnittstelleneinrichtung einer Kommunikationsanlage zu Folgendem umfasst:
- Erzeugen digitaler Ereignisdaten gemäß Anweisungsaktionen, die an eine Anwenderschnittstelle gerichtet sind,
- Kombinieren der digitalen Ereignisdaten mit einem ersten digitalen Datenstrom, um einen zweiten digitalen Datenstrom zu bilden, und
- Steuern eines Senders der Anwenderschnittstelleneinrichtung, einen dritten digitalen Datenstrom zu einer Datenverbindung zu senden,
**dadurch gekennzeichnet, dass** das Computerprogramm ferner computerausführbare Anweisungen umfasst, um den programmierbaren Prozessor der Kommunikationseinrichtung zu steuern, den zweiten digitalen Datenstrom zu verschlüsseln, um den dritten digitalen Datenstrom gemäß kryptographischen Steuerdaten, die für den programmierbaren Prozessor zugänglich sind, zu bilden und den dritten digitalen Datenstrom zum Sender zu übermitteln.

15. Computerprogramm nach Anspruch 14, wobei das Computerprogramm ferner computerausführbare Anweisungen umfasst, um einen programmierbaren Prozessor einer Kommunikationseinrichtung der Kommunikationsanlage zu Folgendem zu steuern:
- Entschlüsseln des dritten digitalen Datenstroms, der von der Datenverbindung empfangen wurde, um den zweiten digitalen Datenstrom zu regenerieren,
- Trennen der digitalen Ereignisdaten und des ersten digitalen Datenstroms vom regenerierten zweiten digitalen Datenstrom,
- Steuern eines Senders, Informationen, die durch den ersten digitalen Datenstrom geführt werden, zu einem Kommunikationsnetz zu senden, und
- Steuern des Sendens der Informationen, die durch den ersten digitalen Datenstrom geführt werden, gemäß den digitalen Ereignisdaten.

## Revendications

1. Dispositif d'interface utilisateur (101, 201, 201a) comprenant :
- une interface utilisateur (102) pour recevoir des actions de commande d'un utilisateur,
- un processeur (104) pour recevoir un premier flux de données numériques, pour générer des données numériques d'événements conformément aux actions de commande dirigées vers l'interface utilisateur, et pour combiner les données numériques d'événements avec le premier flux de données numériques afin de former un deuxième flux de données numériques, et
- un émetteur (105) pour transmettre un troisième flux de données numériques à une liaison de données,
**caractérisé en ce que** le processeur est agencé pour chiffrer le deuxième flux de données numériques afin de former le troisième flux de données numériques conformément aux données de commande cryptographiques accessibles au processeur et pour fournir le troisième flux de données numériques à l'émetteur (105).

2. Dispositif d'interface utilisateur selon la revendication 1, le dispositif d'interface utilisateur comprenant un récepteur (106) pour recevoir un quatrième flux de données numériques de la liaison de données, et le processeur étant agencé pour déchiffrer le quatrième flux de données numériques afin de former un cinquième flux de données numériques et de fournir en sortie le cinquième flux de données numériques.

3. Dispositif d'interface utilisateur selon la revendication 1, l'émetteur étant un émetteur radio configuré pour fonctionner à une fréquence centrale de 2,45 GHz ou 5,8 GHz ou 915 MHz.

4. Dispositif d'interface utilisateur selon la revendication 1, le dispositif d'interface utilisateur comprenant en outre un codeur audio (107) connecté au processeur et agencé pour convertir un premier signal analogique transportant des informations audio en le premier flux de données numériques.

5. Dispositif d'interface utilisateur selon la revendication 2, le dispositif d'interface utilisateur comprenant en outre un décodeur audio (108) connecté au processeur et agencé pour convertir le cinquième flux de données numériques en un deuxième signal analogique.

6. Dispositif d'interface utilisateur selon la revendication 1, l'interface utilisateur comprenant un bouton poussoir de conversation (111) et le processeur étant agencé pour régler les données numériques d'événement pour indiquer si le bouton poussoir de conversation est pressé ou non.

7. Dispositif d'interface utilisateur selon la revendication 1, l'interface utilisateur comprenant un clavier et le processeur étant agencé pour régler les données numériques d'événement afin d'indiquer les frappes dirigées sur le clavier.

8. Équipement de communication comprenant un dispositif d'interface utilisateur (101, 201, 201a) selon l'une quelconque des revendications 1-7 et un dispositif de communication (112, 212, 212a) comprenant :
- un premier récepteur (113) pour recevoir, via la liaison de données, le troisième flux de données numériques du dispositif d'interface utilisateur.
- un processeur (114) pour a) déchiffrer le troisième flux de données numériques afin de régénérer le deuxième flux de données numériques et pour b) séparer les données numériques d'événement et le premier flux de données numériques du deuxième flux de données numériques régénérées, et
- un premier émetteur (115) pour transmettre des informations transportées par le premier flux de données numériques à un réseau de communication,
le processeur du dispositif de communication étant agencé pour commander le fonctionnement de l'émetteur du dispositif de communication conformément à des données numériques d'événement.

9. Équipement de communication selon la revendication 8, le dispositif de communication comprenant en outre un deuxième émetteur (116) pour transmettre un quatrième flux de données numériques au dispositif d'interface utilisateur via la liaison de données, et un deuxième récepteur (117) pour recevoir des informations numériques du réseau de communication, et le processeur du dispositif de communication étant agencé pour chiffrer les informations numériques reçues du réseau de communication afin de former le quatrième flux de données numériques.

10. Équipement de communication selon la revendication 9, le premier émetteur et le deuxième récepteur du dispositif de communication étant agencés pour établir des connexions composées avec un réseau téléphonique public commuté (RTPC) conformément à des données numériques d'événement.

11. Équipement de communication selon la revendication 9, le premier émetteur et le deuxième récepteur du dispositif de communication étant agencés pour établir des connexions avec un réseau mobile cellulaire.

12. Procédé pour établir une communication sécurisée entre un dispositif d'interface utilisateur d'un équipement de communication et un dispositif de communication de l'équipement de communication, le procédé comprenant les actions suivantes dans le dispositif d'interface utilisateur :
- l'utilisation d'un processeur pour recevoir (301) un premier flux de données numériques dont les informations transportées doivent être transmises au dispositif de communication,
- l'utilisation du processeur pour générer (302) des données numériques d'événements conformément à des actions de commande dirigées vers une interface utilisateur,
- l'utilisation du processeur pour combiner (303) les données numériques d'événement avec le premier flux de données numériques afin de former un deuxième flux de données numériques, et
- la fourniture (305) d'un troisième flux de données numériques à un émetteur du dispositif d'interface utilisateur afin de transmettre le troisième flux de données numériques au dispositif de communication via une liaison de données,
**caractérisé en ce que** le procédé comprend l'utilisation (304) du processeur pour chiffrer le deuxième flux de données numériques afin de former le troisième flux de données numériques conformément aux données de commande cryptographiques accessibles au processeur.

13. Procédé selon la revendication 12, le procédé comprenant en outre les actions suivantes dans le dispositif de communication de l'équipement de communication :
- la réception du troisième flux de données numériques de la liaison de données,
- le déchiffrement du troisième flux de données numériques afin de régénérer le deuxième flux de données numériques,
- la séparation des données numériques d'événement et du premier flux de données numériques du deuxième flux de données numériques régénérées,
- la transmission d'informations transportées par le premier flux de données numériques à un réseau de communications, et
- la commande, conformément à des données numériques d'événement, de la transmission des informations transportées par le premier flux de données numériques.

14. Programme informatique comprenant des instructions exécutables par ordinateur pour commander un processeur programmable d'un dispositif d'interface utilisateur d'un équipement de communication pour :
- générer des données numériques d'événements conformément aux actions de commande dirigées vers une interface utilisateur,
- combiner les données numériques d'événement avec un premier flux de données numériques afin de former un deuxième flux de données numériques, et
- commander un émetteur de l'interface utilisateur pour transmettre un troisième flux de données numériques à une liaison de données,
**caractérisé en ce que** le programme informatique comprend en outre des instructions exécutables par ordinateur pour commander le processeur programmable du dispositif de communication de chiffrer le deuxième flux de données numériques afin de former le troisième flux de données numériques conformément aux données de commande cryptographiques accessibles au processeur programmable et de fournir le troisième flux de données numériques à l'émetteur.

15. Programme informatique selon la revendication 14, le programme informatique comprenant en outre des instructions exécutables par ordinateur pour commander un processeur programmable d'un dispositif de communication de l'équipement de communication pour :
- déchiffrer le troisième flux de données numériques reçu de la liaison de données afin de régénérer le deuxième flux de données numériques,
- séparer les données numériques d'événement et le premier flux de données numériques du deuxième flux de données numériques régénérées,
- commander un émetteur pour transmettre des informations transportées par le premier flux de données numériques à un réseau de communication, et
- commander, conformément à des données numériques d'événement, la transmission des informations transportées par le premier flux de données numériques.
